# EUROPÄISCHE PATENTSCHRIFT

(11) **EP 0 822 878 B1**
(45) Veröffentlichungstag und Bekanntmachung des Hinweises auf die Patenterteilung: **15.09.1999**
(21) Anmeldenummer: 97900536.0
(22) Anmeldetag: 28.01.1997
(51) Int. Cl.: B23D 45/12

(54) **ROHRTRENN- UND ANFASVORRICHTUNG**
PIPE-CUTTING AND CHAMFERING ARRANGEMENT
DISPOSITIF POUR SEPARER DES TUBES ET REALISER DES CHANFREINS

(30) Priorität: 31.01.1996 DE 19603361
(43) Veröffentlichungstag der Anmeldung: 11.02.1998
(73) Patentinhaber: Georg Fischer Rohrverbindungstechnik GmbH, 78224 Singen (DE)
(72) Erfinder: FAHR, Markus, D-78244 Gottmadingen (DE)
(74) Vertreter: Weibel, Beat
(86) Internationale Anmeldenummer: CH9700024
(87) Internationale Veröffentlichungsnummer: WO9727969

(56) Entgegenhaltungen:
- EP-A- 0 513 524
- WO-A-91/03341
- DE-A- 3 521 697
- DE-B- 1 171 241

## Beschreibung

Die vorliegende Erfindung bezieht sich auf eine Werkzeug-Anordnung gemäß dem Oberbegriff des Patentanspruchs 4 und auf eine Vorrichtung zum Trennen und Anfasen von Rohren, insbesondere von dünnwandigen Rohren die ein solches Werkzeug enthält, gemäß dem Oberbegriff des Patentanspruch 1. Ein Werkzeug und eine Vorrichtung dieser Art sind aus WO 91/03341 bekannt.

Eine Rohrtrennvorrichtung ist aus der DE PS 1171241 bekannt geworden, welche eine Werkzeugmaschine mit Antriebsgerät und eine der Werkzeugmaschine zugeordnete Spannvorrichtung aufweist. Die Werkzeugmaschine besitzt ein Trennwerkzeug und ein Anfaswerkzeug, die auf einer gemeinsamen Welle angeordnet sind und zusammen mit dem Antriebsgerät um das zu bearbeitende Rohr herum führbar ausgebildet sind.

Diese Trennvorrichtung eignet sich insbesondere dann nicht zum Trennen und Anfasen von dünnwandigen Rohren, wenn die abgetrennten Teile mit anderen Rohren verschweisst werden müssen, da keine exakte und gleichmässige Fase an den Rohrenden angebracht werden können. Dünnwandige Rohre mit grossem Durchmesser werden nämlich in der Spannvorrichtung der Werkzeugmaschine unweigerlich deformiert, so dass vor oder während des Trennvorganges am Rohrumfang Abweichungen vom idealen Kreisquerschnitt entstehen, so dass keine exakte und gleichmässige Fase am Rohrende angebracht werden kann, was jedoch eine Voraussetzung eines nachfolgenden Verschweissen ist. Man ist deshalb genötigt das abgetrennte Rohrende in einem separaten Arbeitsgang zu richten, wonach in einem weiteren Arbeitsgang die Fase oder mehrere Fasen angebracht werden können.

Ein weiterer Nachteil der bekannten Einrichtungen besteht darin, dass die vorderste Kante des Fräsers zum Anbringen der Fase sehr verschleissanfällig ist, wobei kleine und kleinste Späne entstehen, die zwischen das Trenn- und das Anfaswerkzeug gelangen und die beiden Werkzeuge auseinanderspreizen, was oft zur Zerstörung der Werkzeuge führen kann.

Zweck der vorliegenden Erfindung ist es eine Rohrtrenn- und Anfasvorrichtung vorzuschlagen, die die oben erwähnten Nachteile nicht mehr aufweist und ermöglicht, den Trenn- und Anfasvorgang in einem Arbeitsgang durchzuführen, wobei eine saubere Trennstelle mit exakt angebrachter Fase erzielt wird, weiche keiner weiteren Bearbeitung mehr bedarf.

Diese Aufgabe wird mit Hilfe des vorgeschlagenen Rohrtrenn- und Anfasvorrichtung gelöst, welche mindestens die im Einspruch 1 aufgeführten Merkmale aufweist.

Weitere vorteilhafte Ausgestaltungen gehen aus den abhängigen Ansprüchen hervor.

Mit Hilfe der erfindungsgemässen Rohrtrenn- und Anfasvorrichtung werden dünnwandige Rohre in einem Arbeitsgang rundgedrückt, getrennt und exakt angefast, wobei die Anfasvorrichtung geschont wird, da die vorderste Kante des Fräsers während des Anfasvorganges nicht zum Einsatz kommen kann.

Anhand der beigelegten Figuren wird ein bevorzugtes Ausführungsbeispiel der Erfindung näher erläutert.

Es zeigen:
- Fig. 1:: eine Seitenansicht des Erfindungsgegenstandes, teilweise in Schnitt

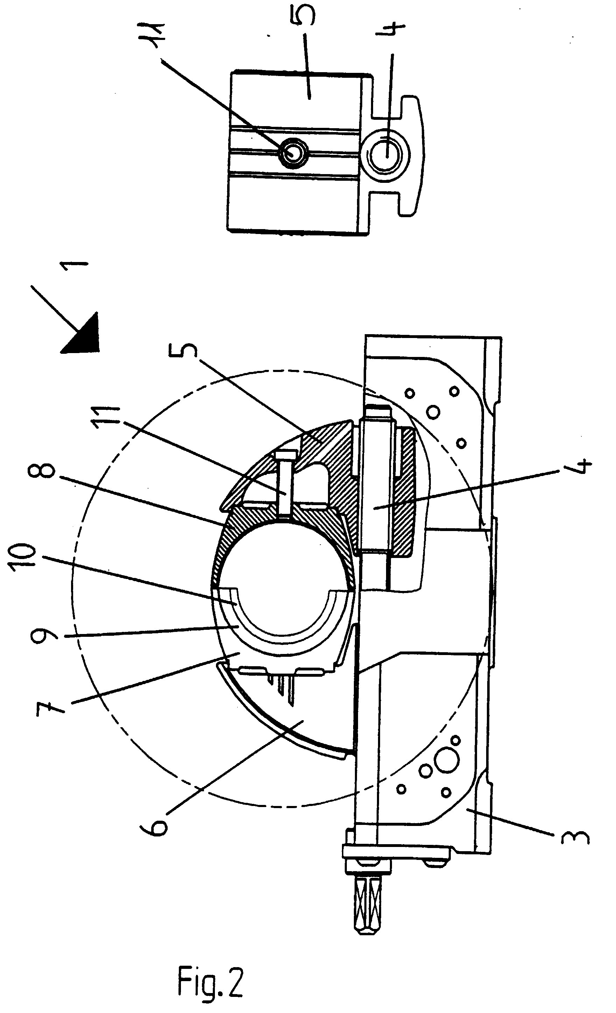

- Fig. 2:: eine Draufsicht auf die Spannvorrichtung der Vortrenn- und Anfasvorrichtung
- Fig. 2a:: eine Einzelheit zu Figur 2
- Fig. 3:: eine Draufsicht auf die Werkzeugmaschine der Rohrtrenn- und Anfasvorrichtung,
- Fig. 4:: eine Detailansicht zu Figur 1 in vergrösserter Darstellung und
- Fig. 5:: eine weitere Detailansicht.

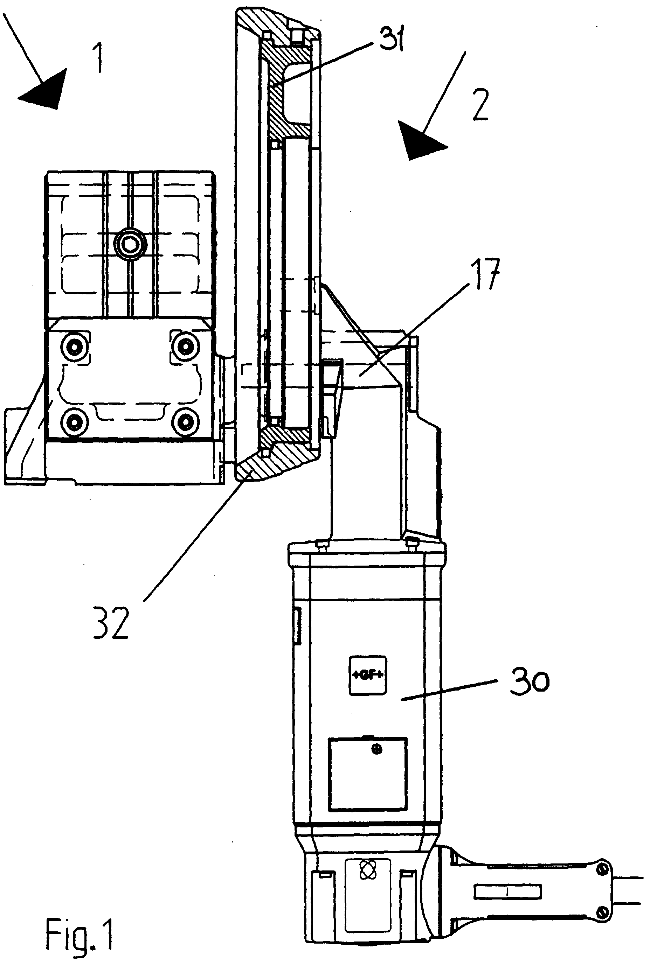

Die in der Figur 1 dargestellte Rohrtrenn- und Anfasvorrichtung, die insbesondere zur Bearbeitung von dünnwandigen Rohren geeignet ist, besteht grundsätzlich aus einer schematisch gezeigten Werkzeugmaschine 2 und aus einer Spannvorrichtung 1, welche der Werkzeugmaschine 2 vorgelagert ist und zur Aufnahme des zu bearbeitenden Rohres dient, wie dies später näher erläutert wird.

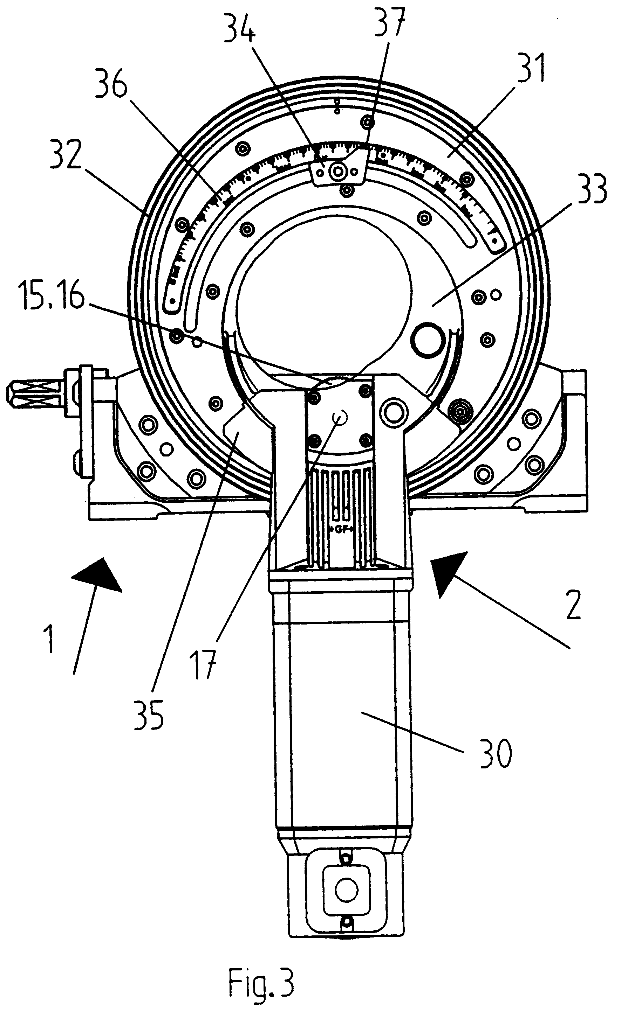

Die Werkzeugmaschine 2 ist mit einem Antriebsgerät 30 versehen, das an einem Exzenterring 33 befestigt ist (Figur 3). Dieser ist drehbar an der Innenfläche eines Führungsringes 31 angeordnet, der in einem ringförmigen Führungsgehäuse 32 Aufnahme findet. Der Führungsring 31 weist einen verstellbaren Anschlag 34 und der Exzenterring 33 einen Mitnehmer 35 auf. Mit 36 ist eine Anzeigeskala mit Gradeinteilung und mit 37 eine Markierung des verstellbaren Anschlages bezeichnet.

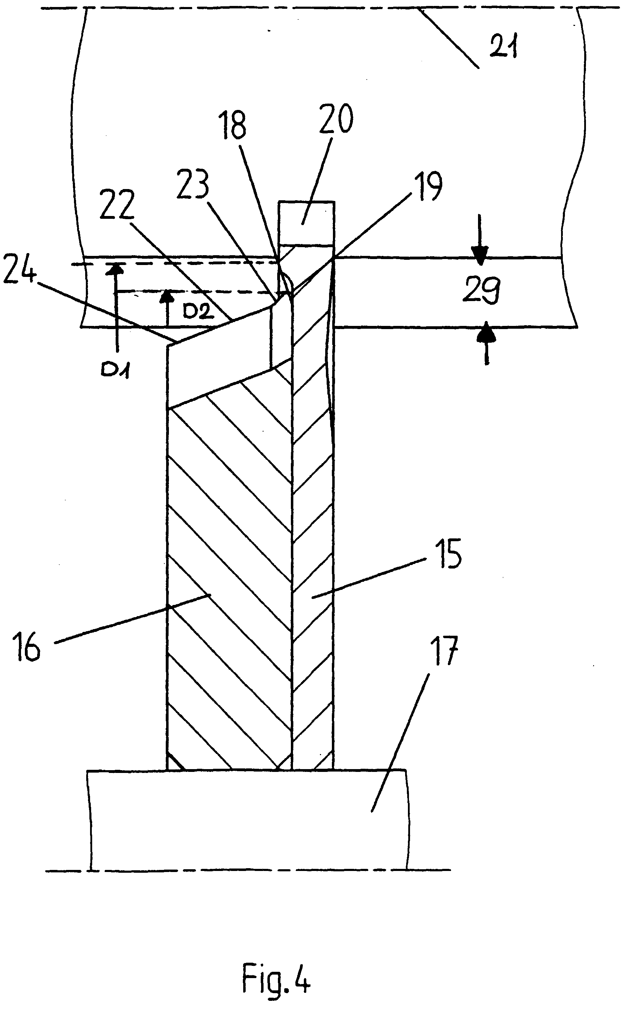

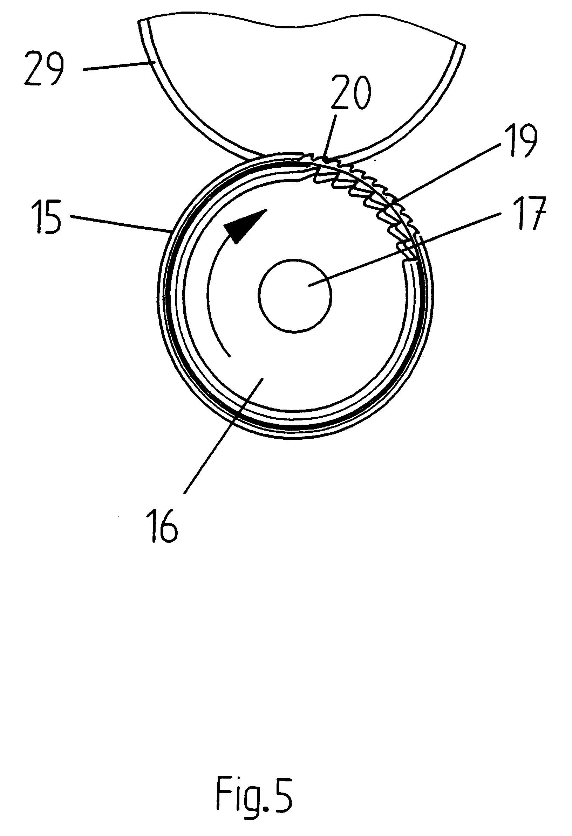

Das Antriebsgerät 30 ist mit einer Antriebswelle 17 versehen, die sich senkrecht zur Ebene des Führungsgehäuses 32 erstreckt und ein Bearbeitungswerkzeug trägt, das aus einem Trennwerkzeug 15 und aus einem Anfaswerkzeug 16 besteht. Beide Werkzeuge 15 und 16 sind blattförmig ausgebildet und dicht nebeneinander angeordnet, wie dies insbesondere aus den Figuren 4 und 5 erkennbar ist. Das Trennwerkzeug 15 ist ein Sägeblatt mit Sägezähnen 20, während das Anfaswerkzeug 16 als Fräser geformt ist. Die Zähne 20 sind auf der Seite des Anfaswerkzeuges 16 so verbreitert, dass sie die äusserste Kante 19 des Anfaswerkzeuges 16 verdecken. In dieser Weise kommt diese Kante beim Anfasvorgang nicht zum Einsatz.

Die praktische Lösung ist so getroffen, dass das Trennwerkzeug 15 auf der Seite wo das Anfaswerkzeug 16 angeordnet ist eine Ausnehmung 18 aufweist, deren Durchmesser D1 grösser ist als der grösste Durchmesser D2 des Anfaswerkzeuges 16. Dieses Anfaswerkzeug 16 findet somit in der Ausnehmung 18 Aufnahme, so dass die besonders verschleisstgefährdete äussere Kante 19 des Anfaswerkzeuges von den Zähnen 20 des Trennwerkzeuges abgedeckt bleibt.

Die Spannvorrichtung 2, die der beschriebenen Werkzeugmaschine 1 vorgelagert ist, dient zur Aufnahme und zum Festhalten eines Rohres 10 und weist einen Schraubstock 3 auf, in welchem Halteböcke 5 und 6 mittels einer Spindel 4 gegeneinander verschiebbar geführt sind. Die Halteböcke 5 und 6 sind mit je einer Spannbacke 7 und 8 versehen, die mittels Schrauben 11 mit den Halteböcken 5 beziehungsweise 6 verbunden sind. Die Spannbacken 7 und 8 sind mit halbkreisförmigen Innenumfangsflächen 9 ausgerüstet, die zusammen eine Zylinderfläche bilden und das eingespannte Rohr 10 entsprechend fassen.

Durch Lösen der Schrauben 11 sind die Spannbacken 7 und 8 austauschbar, wobei immer Spannbackenpaare eingesetzt werden, deren Innenumfangsflächen dem Sollmass der Aussenfläche des zu bearbeitenden Rohres 10 entsprechen. Wenn ein im Querschnitt deformiertes Rohr eingespannt wird, was bei dünnwandigen Rohren sehr oft der Fall ist, so wird dieses durch das Einspannen dem Sollmass entsprechend, genau in Kreisform gebracht. Das rundgedrückte Rohr kann dann im nachfolgenden Arbeitsgang getrennt und angefast werden. Es sind also mehrere im Durchmesser unterschiedliche Spannbackenpaaren vorhanden die je nach Grössen des zu bearbeitenden Rohres wahlweise zu verwenden sind.

Für die Befestigung der Spannbacken sind auch andere Lösungen möglich die zum Beispiel ein Schnellspannsystem mit Kniehebelhalterung beinhalten können. Als Material für die Spannbacken 7 und 8 wird vorteilhafterweise ein nicht gehärteter Werkstoff wie GGG 40 verwendet. Die Innenumfangsflächen der Spannbacken werden mechanisch bearbeitet und mit sehr geringen Toleranzen gegenüber dem Sollmass ausgeführt.

Das zu bearbeitende Rohr 10 wird in die Spannvorrichtung 1 eingespannt, so dass es in das Führungsgehäuse 32 der Werkzeugmaschine hineinragt und die Trennstelle im Bereich der Bearbeitungswerkzeuge 15 und 16 zu liegen kommt. Das Antriebsgerät 30 wird zusammen mit den Werkzeugen 15, 16 mit Hilfe des Exzenterringes 33 um die Achse 21 des Rohres 10 verstellt, wobei die Eingriffsstellung durch den verstellbaren Anschlag 34 bestimmt wird, in dem der Mitnehmerzapfen 35 des Antriebsgerätes 30 gegen den eingestellten Anschlag 24 stösst. Die Gradeinteilung der Anzeigeskala 36 und die Markierung 37, zum Beispiel in der Form eines Noniusses, erlauben eine ganz genaue Einstellung der Bearbeitungswerkzeuge dem Durchmesser des zu bearbeitenden Rohres entsprechend, wobei die sehr geringen Toleranzen, die beim Anfasvorgang von dünnwandigen Rohren gegeben sind, nicht zuletzt deshalb mühelos eingehalten werden können, da der Umfang des eingespannten Rohres genau dem Kreisquerschnitt entspricht.

Zum Trennen des Rohres 10 wird das Antriebsgerät 30 im Führungsring 31 um das Rohr 10 herumgeführt, so dass die Sägezähne 20 des Trennwerkzeuges 15 zum Eingriff kommen. Das mitrotierende Anfaswerkzeug 16 greift mit der Schneidkante 22 an der Trennstelle ein und führt das Anfasen aus, wobei die äusserste Kante 19 immer von den Sägezähnen 20 geschützt bleibt und nicht zum Einsatz kommt.

Gemäss Figur 4 wird ein Fasenfräser 16 verwendet dessen Schneidkante 22 bezüglich der Rohrlängsachse 21 zuerst eine leichte und anschliessend eine stärkere Neigung aufweist. Die entsprechenden Schneidkanten sind mit 24 und 23 bezeichnet. Mit einem solchen Fräser können am Rohrende zwei unterschiedliche Fasen angebracht werden. Bei dieser geometrischen Ausgestaltung des Fräsers weist die Schneidkante 23 einen Winkel von ca. 45° und die anschliessende Schneidkante 24 einen Winkel von ca. 25° - 30° gegenüber der Längsachse 21 des Rohres auf.

Schliesslich ist aus der Figur 5 ersichtlich dass der Fräser des Anfaswerkzeuges 16 nur einen unwesentlich geringeren Durchmesser als das Sägeblatt des Trennwerkzeuges 15 aufweist. Gemäss dem Ausführungsbeispiel ist der Radius um den Betrag der Eingriffstiefe des Sägeblattes kleiner, welche Eingriffstiefe hier ca. das 1,5 Fache der Rohrwanddicke 29 beträgt.

In der beschriebenen Weise ist es auch möglich zwei oder mehrere unterschiedliche Fasen im gleichen Arbeitsgang anzubringen. Dies könnte zum Beispiel bei der Installation von Trinkwasserleitungen erforderlich sein, wo das Verbinden von dünnwandigen Rohren aus Edelstahl das Aufsetzen eines Pressfittings mit Dichtungsring aus Gummi erforderlich macht. Dabei sollten zwei unterschiedliche Fasen am Rohrende aufgebracht werden und zwar eine steile Fase zum Ansetzen und Zentrieren des Pressfittings und anschliessend eine flache Einlauffase. Der in der Figur 4 gezeigte Fräser mit Schneidkante 22, die zwei verschieden geneigt verlaufende Teile 23 und 24 aufweist, ist für den genannten Zweck besonders geeignet. In einem Arbeitsgang kann die steile Fase mit Hilfe der Schneidkante 23 und die flache Einlauffase mit der Schneidkante 24 erstellt werden.

## Patentansprüche

1. Rohrtrenn- und Anfasvorrichtung für Rohre, insbesondere für dünnwandige Rohre, mit einer ein Antriebsgerät (30) aufweisenden Werkzeugmaschine(2) und einer dieser zugeordneten Spannvorrichtung (1) mit Spannbacken (7,8), welche Werkzeugmaschine ein Trennwerkzeug (15) und ein Anfaswerkzeug (16) besitzt, die auf einer gemeinsamen Welle (17) nebeneinander angeordnet sind und ein Bearbeitungswerkzeug bilden, das zusammen mit dem Antriebsgerät (30) um das zu bearbeitende, in die Spannvorrichtung (1) eingespannte Rohr (10) herum führbar ist, wobei zum Ausgleich und zur Vermeidung von Abweichungen im Rundumfang des zu bearbeitenden Rohres (10) die Spannvorrichtung (1) mit mehreren, im Durchmesser verschiedenen, je nach Grösse des zu bearbeitenden Rohres (10) wahlweise verwendbaren Spannbacken (7,8) mit im Querschnitt halbkreisförmiger Umfangsfläche (9) ausgerüstet ist, welche das zu berarbeitende Rohr 10 beim Einspannen entsprechend formen, dadurch gekennzeichnet, dass die Zähne (20) des als Sägeblatt ausgebildeten Trennwerkzeuges (15) auf der Seite des Anfaswerkzeuges (16) gegenüber der Sägeblattdicke einseitig soweit verbreitert sind, dass die verbreiterten Zähne (20) die äusserste Kante (19) des an das Sägeblatt (15) seitlich anliegenden, blattförmig.ausgebildeten Anfaswerkzeuges (16) verdecken, so dass beim Anfasvorgang die äusserste Kante (19) des Anfaswerkzeuges (16) nicht zum Einsatz kommt.

2. Rohrtrenn- und Anfasvorrichtung nach Anspruch 1, dadurch gekennzeichnet, dass das Trennwerkzeug (15) auf der Seite des Anfaswerkzeuges (16) eine Ausnehmung (18) aufweist, deren Durchmesser grösser als der Aussendurchmesser des Anfaswerkzeuges (16) ist, in welcher Ausnehmung (18) das Anfaswerkzeug (16) Aufnahme findet, so dass die äusserste Kante (19) desselben von den Zähnen (20) des Trennwerkzeuges (15) abgedeckt ist.

3. Rohrtrenn-und Anfasvorrrichtung nach den Ansprüchen 1 und 2, dadurch gekennzeichnet, dass die Spannbacken (7,8) auswechselbar in gegeneinander verschiebbaren Halteböcken (5,6) der Spannvorrichtung (1) angeordnet sind.

4. Werkzeug-Anordnung mit einem Trennwerkzeug (15) und einem Anfaswerkzeug (16), wobei für das Trennen und Anfasen eine Sägeblattanordung derart vorgesehen ist, dass das Trennwerkzeug (15) und das Anfaswerkzeug (16) auf eines gemeinsamen Welle (17) angeordnet sind und dass das als Sägeblatt ausgebildete Trennwerkzeug (15) an der Seite des als Sägeblatt ausgebildeten Anfaswerkzeuges (16) anliegt, dadurch gekennzeichnet, dass die Zähne (20) des als Sägeblatt ausgebildeten Trennwerkzeuges (15) gegenüber der Sägeblattdicke einseitig derart verbreitert sind, dass die verbreiterten Zähne (20) die äussere Kante (19) des an das Sägeblatt (15) seitlich anliegenden blattförmig ausgebildeten Anfaswerkzeuges (16) verdecken, so dass beim Anfasvorgang die äusserste Kante (19) des Anfaswerkzeuges (16) nicht zum Einsatz kommt.

## Claims

1. Pipe-cutting and chamfering device for pipes, in particular for thin-walled pipes, with a machine tool (2) which has a drive unit (30), and a clamping device (1), which is assigned to this machine tool, with clamping jaws (7, 8), which machine tool has a cutting tool (15) and a chamfering tool (16), which are arranged next to one another on a common shaft (17) and form a working tool which, together with the drive unit (30), can be guided around the pipe (10) which is to be processed and is clamped in the clamping device (1), in which arrangement, in order to compensate for and avoid deviations in the circumference of the pipe (10) to be processed, the clamping device (1) is equipped with a plurality of clamping jaws (7, 8) which have different diameters, can be used as desired depending on the size of the pipe (10) to be processed, and have a circumferential surface (9) which is semicircular in cross section, and which clamping jaws suitably deform the pipe (10) to be processed when it is clamped in, characterized in that the teeth (20) of the cutting tool (15), which is designed as a saw blade, on the side of the chamfering tool (16) are widened on one side with respect to the saw blade thickness to such an extent that the widened teeth (20) cover the outermost edge (19) of the chamfering tool (16), which bears laterally against the saw blade (15) and is of blade-like design, so that during the chamfering operation the outermost edge (19) of the chamfering tool (16) is not used.

2. Pipe-cutting and chamfering device according to Claim 1, characterized in that the cutting tool (15), on the side of the chamfering tool (16), has a recess (18), the diameter of which is larger than the external diameter of the chamfering tool (16), in which recess (18) the chamfering tool (16) is accommodated, so that the outermost edge (19) thereof is covered by the teeth (20) of the cutting tool (15)

3. Pipe-cutting and chamfering device according to Claims 1 and 2, characterized in that the clamping jaws (7, 8) are arranged exchangeably in holding blocks (5, 6), which can be displaced with respect to one another, of the clamping device (1).

4. Tool arrangement with a cutting tool (15) and a chamfering tool (16), a saw blade arrangement being provided for the cutting and chamfering in such a manner that the cutting tool (15) and the chamfering tool (16) are arranged on a common shaft (17), and in such a manner that the cutting tool (15), which is designed as a saw blade, bears against the side of the chamfering tool (16), which is designed as a saw blade, characterized in that the teeth (20) of the cutting tool (15) which is designed as a saw blade, are widened on one side compared to the thickness of the saw blade, in such a manner that the widened teeth (20) cover the outer edge (19) of the chamfering tool (16), which is of blade-like design and bears laterally against the saw blade (15), so that the outermost edge (19) of the chamfering tool (16) is not used in the chamfering operation.

## Revendications

1. Dispositif pour séparer des tubes et réaliser des chanfreins pour tubes, en particulier pour tubes à parois fines, comprenant une machine-outil (2) présentant un appareil d'entraînement (30) et un dispositif de serrage (1) associé à celle-ci, avec des mâchoires de serrage (7, 8) laquelle machine-outil possède un outil de séparation (15) et un outil de chanfreinage (16), qui sont disposés l'un à côté de l'autre sur un arbre commun (17) et forment un outil d'usinage, qui, conjointement avec l'appareil d'entraînement (30), peut être guidé autour du tube à usiner (10), serré dans le dispositif de serrage (1), le dispositif de serrage (1) étant équipé, afin de compenser et d'éviter les déviations dans la périphérie circulaire du tube à usiner (10), de plusieurs mâchoires de serrage (7, 8) de différents diamètres pouvant être utilisées au choix en fonction de la taille du tube à usiner (10) et ayant une surface périphérique (9) semi-circulaire en section transversale, lesquelles forment en serrant de manière correspondante le tube à usiner (10), caractérisé en ce que les dents (20) de l'outil de séparation (15) conçu en tant que lame de scie sont élargies d'un côté, du côté de l'outil de chanfreinage (16) par rapport à l'épaisseur de la lame de scie de telle sorte que les dents élargies (20) recouvrent l'arête la plus extérieure (19) de l'outil de chanfreinage (16) conçu en forme de lame et reposant latéralement contre la lame de scie (15), de sorte que lors du processus de chanfreinage, l'arête la plus extérieure (19) de l'outil de chanfreinage (16) ne soit pas utilisée.

2. Dispositif pour séparer des tubes et réaliser des chanfreins selon la revendication 1, caractérisé en ce que l'outil de séparation (15) présente, du côté de l'outil de chanfreinage (16), un évidement (18) dont le diamètre est supérieur au diamètre extérieur de l'outil de chanfreinage (16), l'outil de chanfreinage (16) étant logé dans ledit évidement (18), de sorte que l'arête la plus extérieure (19) de celui-ci soit recouverte par les dents (20) de l'outil de séparation (15).

3. Dispositif pour séparer des tubes et réaliser des chanfreins selon les revendications 1 et 2, caractérisé en ce que les mâchoires de serrage (7, 8) sont disposées de manière remplaçable dans des bâtis supports (5, 6) mobiles l'un par rapport à l'autre du dispositif de serrage (1).

4. Agencement d'outils avec un outil de séparation (15) et un outil de chanfreinage (16), dans lequel il est prévu, pour la séparation et le chanfreinage, un arrangement de lame de scie tel que l'outil de séparation (15) et l'outil de chanfreinage (16) soient disposés sur un arbre commun (17) et que l'outil de séparation (15) formé en tant que lame de scie s'appuie du côté de l'outil de chanfreinage (16) conçu en tant que lame de scie, caractérisé en ce que les dents (20) de l'outil de séparation (15) conçu en tant que lame de scie sont élargies d'un côté, par rapport à l'épaisseur de la lame de scie, de telle sorte que les dents élargies (20) recouvrent l'arête la plus extérieure (19) de l'outil de chanfreinage (16) formé en tant que lame reposant latéralement contre la lame de scie (15), de sorte que lors du processus de chanfreinage, l'arête la plus extérieure (19) de l'outil de chanfreinage (16) ne soit pas utilisée.
